(19) **Europäisches Patentamt / European Patent Office / Office européen des brevets**

(11) **EP 2 363 385 B1**

(12) **EUROPEAN PATENT SPECIFICATION**

(45) Date of publication and mention
of the grant of the patent:
**22.04.2015 Bulletin 2015/17**

(21) Application number: **11250156.4**

(22) Date of filing: **11.02.2011**

(51) Int Cl.:
*C04B 35/56* (2006.01)     *C04B 35/565* (2006.01)
*C04B 35/622* (2006.01)     *F01N 3/022* (2006.01)
*B01J 35/04* (2006.01)     *B01D 39/20* (2006.01)

(54) **Method for manufacturing silicon carbide honeycomb structure**

Verfahren zur Herstellung einer Silikoncarbidwabenstruktur

Procédé de fabrication d'une structure en nid d'abeille en carbure de silicium

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2010 JP 2010033346**

(43) Date of publication of application:
**07.09.2011 Bulletin 2011/36**

(73) Proprietor: **NGK Insulators, Ltd.
Nagoya City, Aichi Pref. (JP)**

(72) Inventors:
• **Nagai, Shungo
Nagoya City
Aichi-ken 467-8530 (JP)**

• **Kaneda, Atsushi
Nagoya City
Aichi-ken 467-8530 (JP)**

(74) Representative: **Paget, Hugh Charles Edward et al
Mewburn Ellis LLP
33 Gutter Lane
London
EC2V 8AS (GB)**

(56) References cited:
**US-A1- 2005 069 675     US-A1- 2009 324 455
US-B2- 7 524 450**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Background of the Invention and Related Art Statement

The present invention relates to a method for manufacturing a silicon carbide honeycomb structure. Also described are a silicon carbide honeycomb structure, a honeycomb filter, and a catalyst-carrying honeycomb filter.

As a filter (diesel particulate filter (DPF)) for trapping and removing particulate matter contained in a dust-containing fluid such as exhaust gas from a diesel engine or as a catalyst carrier for loading a catalyst component purifying harmful substances in exhaust gas (for exhaust gas purification), there is widely known a porous honeycomb structure constituted of cell partition walls (rib) forming a complex of mutually adjacent cells and a honeycomb outer wall surrounding and holding the outermost cells located in the outermost periphery of the cell complex, and as the constituent material, there is used refractory silicon carbide, cordierite, or the like, a composite material of these materials, or the like.

By the way, as a method for economically manufacturing the aforementioned honeycomb structure, it can be considered that a starting raw material composition is prepared (regenerated) from a recovered material (for example, an unfired formed article excluded for any reason upon moving from a drying step to a firing step, an unfired dried material of a fragment, or the like, and a fired article) derived from a starting raw material of a honeycomb structure generated in a honeycomb structure manufacture step to reuse the starting raw material composition for the formation of a forming material as a regeneration raw material.

JP-A-2004-188819 discloses a method for manufacturing a honeycomb structure, where a blended material for forming is obtained by adding a green pulverized material obtained by pulverizing a green article having the same composition as that of the blended material for the formation to have a maximum diameter of 50 mm or less in a cordierite honeycomb manufacturing step, and mixing them with a mixer.

WO 2005/030675 pamphlet discloses a manufacturing method where a dried article before firing is pulverized and returned as a part of a starting raw material in a silicon carbide honeycomb structure. It is disclosed that the regeneration raw material has an average particle size of 10 to 300 $\mu$m, and that, by the use of a regeneration raw material, structure defects such as a void and a coarse particle can be inhibited to be able to obtain a honeycomb structure having excellent strength and uniform thermal conductivity with an effect of shortening the kneading time because the material was once kneaded.

However, since it is considered that, when a waste material obtained after firing is used, the waste material affects the quality of the products, the waste material after firing has not been used. For example, in cordierite, a kaolinite group mineral or a layer mineral such as talc is contained in a starting raw material, the raw material is oriented during the extrusion forming, and the cordierite crystal phase is orientationally grown to exhibit low thermal expansion properties. When a waste material after firing is added to the starting raw material, orientation of the raw material is impaired to cause a problem of high thermal expansion as a result. Therefore, a raw material after firing could not be reused.

US 2005/0069675 describes a method for producing a honeycomb structure using, as a part of a starting material, a recycled raw material recycled from a recovered material which is produced in the production process of the honeycomb structure and originates from the starting material for the honeycomb structure. The recycled raw material is ground so that it has an average particle diameter of 10 to 2000 $\mu$m and contains 10% or less by weight of particles having an average particle diameter of 2800 $\mu$m or more.

Summary of the Invention

Therefore, the use of the waste material after firing in a silicon carbide honeycomb structure was studied. The present invention aims to provide a method for manufacturing a silicon carbide honeycomb structure having properties such as thermal conductivity, strength, and porosities which are about the same as those of the case of using the original starting raw material, the material being able to improve yield and reduce costs and using a regeneration raw material recovered after firing in a process of manufacturing a silicon carbide honeycomb structure. Also described are a silicon carbide honeycomb structure; a honeycomb filter; and a catalyst-carrying honeycomb filter.

The present inventors found out that, in a silicon carbide honeycomb structure, an influence of crystal orientation on the properties is small as cordierite to be able to return the raw material after firing. In addition, they found out that the aforementioned problem can be solved by specifying the particle diameter of the regeneration raw material and the proportion of the regeneration raw material in the starting raw material. That is, according to the present invention, there are provided the following method for manufacturing a honeycomb structure.

A method for manufacturing a silicon carbide honeycomb structure, the method using a regeneration raw material regenerated from a recovered material derived from a starting raw material of a silicon carbide honeycomb structure generated in a manufacture process of a silicon carbide honeycomb structure, wherein the regeneration raw material is recovered from a material constituting the silicon carbide honeycomb structure in a step after the starting raw material is fired, the regeneration raw material having an oxygen content rate of 20 mass % or less, the regeneration raw material is added to the starting raw material to account for 50 mass% or less of the entire starting raw material as a part of the starting raw material after the average particle size of the regeneration raw material is controlled to be 5 to 100 $\mu$m, or the average particle size of the regeneration raw material is controlled to be 5 to 100 $\mu$m after the regeneration raw material is added to the starting raw material to account for 50 mass% or less of the entire starting raw material as a part of the starting raw material, and the silicon carbide honeycomb structure is manufactured using the resultant starting raw material.

Described herein is a silicon carbide honeycomb structure manufactured by a method for manufacturing a silicon carbide honeycomb structure according to [1].

Also described herein is a honeycomb filter manufactured by the use of such a silicon carbide honeycomb structure.

Also described herein is a catalyst-carrying honeycomb filter where a catalyst is loaded on such a honeycomb filter.

According to a method for manufacturing a honeycomb structure of the present invention, there can be manufactured a honeycomb structure having properties such as thermal conductivity, strength, porosity and the like which are about the same as those of a conventional honeycomb structure, and reduction of costs due to improvement in the raw material yield is possible. In addition, since shape retainability of kneaded clay is improved, bent defects in a forming step can be reduced to improve the yield. In addition, it has the contraction reducing effect upon drying, thereby improving the size precision and reducing crack defects due to contraction stress upon drying to improve the yield. Since the starting material contains a material once fired, the firing time can be shortened.

Brief Description of the Drawings

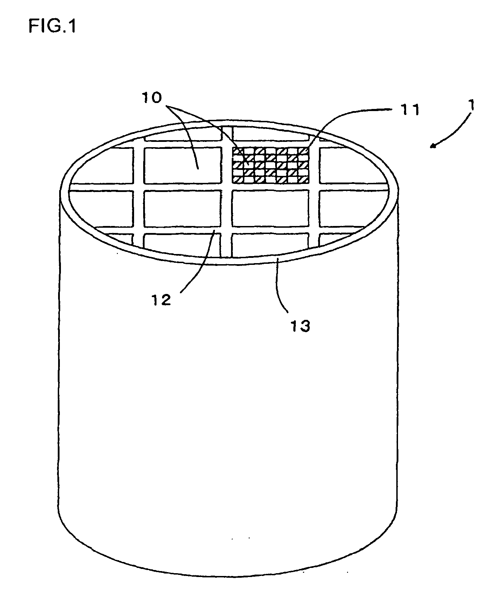

Fig. 1 is an explanatory view of a honeycomb structure of the present invention.

Reference Numerals

1: completed article (honeycomb structure), 10: honeycomb segment (honeycomb structure), 11: plugging portion, 12: bonding material, 13: coating material

Detailed Description of the Invention

Hereinbelow, an embodiment of the present invention will be described with referring to the drawings. The present invention is by no means limited to the following embodiment, and changes, modifications, and improvements may be made as long as they do not deviate from the scope of the present invention.

A method for manufacturing a honeycomb structure of the present invention is a method using a regeneration raw material regenerated from a recovered material derived from the starting raw material (including both a material containing the regeneration material and a material not containing the regeneration material) of the honeycomb structure generated in a manufacture process of a silicon carbide honeycomb structure as a part of the starting raw material. The regeneration raw material is recovered from the material constituting the silicon carbide honeycomb structure in a step after the starting raw material is fired. The regeneration raw material contains a bonding material and a coating material besides a honeycomb segment and the like after firing. Then, after the average particle diameter of the regeneration raw material is controlled to be 5 to 100 $\mu$m, the regeneration raw material is added to the starting raw material as a part of the starting raw material in such a manner that the regeneration raw material accounts for 50 mass% or less of the entire starting raw material to manufacture a silicon carbide honeycomb structure by the use of the starting material. Alternatively, after the regeneration raw material is added to the starting raw material as a part of the starting raw material in such a manner that the regeneration raw material accounts for 50 mass% or less of the entire starting raw material, the average particle diameter of the regeneration raw material is controlled to be 5 to 100 $\mu$m to manufacture a silicon carbide honeycomb structure by the use of the resultant starting material.

In a method for manufacturing a honeycomb structure of the present invention, the average particle diameter of the regeneration raw material is controlled to be 5 to 100 $\mu$m. In the case of using a regeneration raw material such as in the present invention, aggregation is hardly caused. However, in a regeneration raw material having large particles having an average particle diameter of above 100 $\mu$m of the regeneration raw material, the other raw materials enter the gap contained in the regeneration raw material. As a result, the porosity and the mean pore size of the products become small, and such a regeneration raw material is not suitable. In addition, when the regeneration raw material is pulverized until it has an average particle diameter of below 5 $\mu$m, the pulverization efficiency is bad, and high costs are required. In addition, abrasion of the pulverization equipment increases, and mixing of impurities may be increased.

The recovered material derived from the starting raw material of the honeycomb structure and generated in a manufacture process of a silicon carbide honeycomb structure specifying includes segment defectives after firing, bonding defectives, grinding offcuts of bonded articles, grinding dust of bonded articles, completed article defectives, and the like. These were already fired once. Since these materials are used as a part of the starting raw material, it is also possible to shorten the firing time. Further, in a manufacturing method of the present invention, also materials recovered from the materials constituting a silicon carbide honeycomb structure in a step after firing the starting material can be used as a regeneration raw material, and the regeneration raw material includes a bonding material for bonding segments to obtain a bonded article and a coating material for coating the outer peripheral portion after the bonded article is ground.

The step where a waste material serving as the recovered material is generated will specifically be described with referring to Fig. 1. A raw material powder (e.g., silicon carbide powder) for a honeycomb segment 10, a binder (e.g., methyl cellulose and hydroxypropoxyl methyl cellulose), a surfactant, and water are weighed and subjected to kneading to manufacture kneaded clay having plasticity. By subjecting the kneaded clay to extrusion forming, honeycomb segments each having a plurality of cells partitioned by porous partition walls and functioning as fluid passages extending in the axial direction are formed (honeycomb segments are included in a honeycomb structure in the present specification).

A plugging material is filled into the end portions on one side of predetermined cells, and the plugging material is filled into the end portions on the other side of the other cells to obtain honeycomb segments 10 each having plugging portions 11 plugging alternately in opening end portions on one side and opening end portions on the other side of a large number of cells.

The plugged honeycomb segments 10 are fired. Defectives generated by the firing and defectives discovered in an intermediate inspection can be used as recovered material.

Next, the plugged honeycomb segments 10 are bonded together with a bonding material 12 (ceramic cement), followed by grinding the outer periphery to have a circular cylindrical shape and then applying a coating material 13 on the outer peripheral face to obtain a completed article 1. In the bonding with a bonding material 12, bonding defectives are generated. In addition, by the grinding in the outer periphery, grinding offcuts and grinding powders are generated. By application of the coating material 13 and a completion inspection, completed article defectives are generated. These can be used as recovered materials. That is, the recovered materials include the bonding material 12 and the coating material 13.

However, in the case that a recovered material containing the bonding material 12 and the coating material 13 of a bonding defective, a grinding offcut of a bonded article, grinding dust, completed article defective, and the like is used as a regeneration raw material, since a large amount of oxides such as alumina and silica are present in the bonding material 12 and the coating material 13 in comparison with the honeycomb segment, when the proportion of the bonding material 12 and the coating material 13 in the regeneration raw material is high, precipitation of oxides may cause a change in color. Since this change in color causes no problem in the production properties, costs can be reduced. However, if the appearance as a product is valued, the discolored product cannot be treated as a good product, and the yield may fall. In order to inhibit the occurrence of the color change in the present invention the regeneration raw material has an oxygen content rate of 20 mass% or less. It is desirable to adjust the proportion of the bonding material 12 and the coating material 13 in such a manner that the oxygen content rate in the regeneration raw material becomes 20 mass% or less.

As a method for pulverizing the recovered materials, a dry pulverization method is appropriate. The dry pulverization method includes methods using a hammer mill, a roller mill, a high speed pin mill, a Raymond mill, a roll crusher with teeth, a corrugated roll crusher, or an impact crusher.

Incidentally, though pulverized material obtained by pulverization with a Desinter, a Raymond mill, or the like may be used without change as the regeneration raw material, sieving to uniformalize the particle size can improve the kneading property and reduce defectives. The proportion of the regeneration raw material in the entire starting raw material is 50 mass% or less. When the proportion of the regeneration raw material is above 50 mass%, sinterability in a firing step is deteriorated, and three-point bending strength and thermal conductivity of the product fall.

A honeycomb structure is manufactured by the use of the aforementioned regeneration rawmaterial. That is, the regeneration raw material recovered after firing the starting raw material is added to the starting raw material as a part of the starting raw material, and a binder such as methyl cellulose and hydroxypropoxylmethyl cellulose, an organic pore former, a surfactant, water, and the like are added to manufacture kneaded clay having plasticity. The kneaded clay is subjected to, for example, extrusion forming to form a quadrangular plasma-shaped honeycomb formed article having a large number of cells partitioned by partition walls and extending through in the axial direction. The honeycomb formed article is subjected to plugging and then drying with, for example, microwaves and hot air. Then, it is calcined to remove the binder and the organic pore former and then fired to manufacture a honeycomb segment 10. Incidentally, as the material for the plugging portion 11, there may be used, for example, a material obtained by adding water as a dispersion medium to a mixture of a ceramic powder, a binding agent, and a deflocculant, and then mixing them.

Next, plugged honeycomb structures (honeycomb segments 10) are unitarily bonded with a bonding material 12 (ceramic cement). The bonding material 12 of the bonding material layer contains inorganic particles and an inorganic adhesive agent as main components and an organic binder, a surfactant, a resin balloon, water, and the like as accessory components. As the inorganic particles, there may be employed plate-shaped particles, spherical particles, massive particles, fiber-shaped particles, and needle-shaped particles. As the inorganic adhesive agent, there may be employed colloidal silica (silica sol), colloidal alumina (alumina sol), various oxide sols, ethyl silicate, liquid glass, silica polymer, and aluminum phosphate. The main components preferably contains a ceramic powder in common with the constituent components of the honeycomb segment 10, and it is preferable that the main component does not contain fiber-shaped particles such as ceramic fibers from the viewpoints of a health problem and the like, but contains plate-shaped particles. As the plate-shaped particles, there may be used, for example, mica, talc, boron nitride, glass flakes, and the like. By applying the bonding material 12 on the bonding faces of the honeycomb segments 10, the bonding material layers can be formed.

The outer periphery of the honeycomb structures unitarily bonded with the bonding material 12 was ground to have a circular cylindrical shape, and the coating material 13 is applied on the outer peripheral face to obtain a completed article. The coating material 13 contains a ceramic powder, water, a bonding material, and the like.

Since a silicon carbide honeycomb structure has excellent strength and uniform thermal conductivity, it can suitably be used as a honeycomb filter (e.g., diesel particulate filter (DPF)), an exhaust gas purification catalyst carrier (catalyst-carrying honeycomb filter), or the like. In the case that it is used as a catalyst carrier, a noble metal such as platinum (Pt), palladium (Pd), and rhodium (Rh) or the like can be loaded as a catalyst. Besides the noble metal, other catalysts or purification materials may further be loaded. For example, a NOx adsorber catalyst of alkali metal (Li, Na, K, Cs, etc.) or alkali earth metal (Ca, Ba, Sr, etc.), a ternary catalyst, a promoter represented by an oxide of cerium (Ce) and/or zirconium (Zr), a HC (Hydrocarbon) adsorber material, or the like may be loaded.

Example

Hereinbelow, the present invention will be described in more detail on the basis of Examples. However, the present invention is not limited to these Embodiments.

(Examples 1 to 16 and Comparative Examples 1 to 3)

A silicon carbide powder having an average particle diameter of 48 $\mu$m and a metal silicon powder at a ratio (mass ratio) of 80 : 20 were mixed together, and methyl cellulose (binder), a surfactant, an auxiliary, and water were further added to the mixture, followed by kneading with a kneader. A honeycomb segment (honeycomb formed article) was obtained by extrusion forming with an extruder from the kneaded clay obtained above and subj ected to plugging, drying with microwaves, and further drying at 120°C for 30 minutes. After the drying, the honeycomb segment (dried article) was fired at 1450°C for two hours to obtain a silicon carbide based honeycomb segment (honeycomb structure) having a side face of 35 mm $\times$ 35 mm, a length of 254 mm, a partition wall thickness of 300 $\mu$m, and a cell density of 47 cells/cm$^2$. After the firing, segment defectives, bonding defectives, bonded article grinding offcuts, bonded article grinding dust, and completed article defectives were pulverized with a roller mill to have an average particle diameter of 20 $\mu$m to be used as a regeneration raw material.

Next, a new raw material obtained by mixing a silicon carbide powder having an average particle diameter of 48 $\mu$m and a metal silicon powder at a ratio (mass ratio) of 80 : 20 together and the regeneration raw material were mixed at the ratio shown in Table 1, and a pore former and starch were added to the mixture. Further, methyl cellulose (binder), a surfactant, an auxiliary, and water were added to the mixture, and they were mixed with a kneader. After the shape maintainability of the kneaded clay was measured, a honeycomb segment (honeycomb formed article) was obtained by subjecting the kneaded clay to extrusion forming and plugged, followed by drying with microwaves and further drying with hot air at 120°C for 30 minutes. After the drying, the honeycomb segment (dried article) was fired at 1450°C for two hours to obtain a silicon carbide based honeycomb segment (honeycomb structure) having a side face of 35 mm $\times$ 35 mm, a length of 254 mm, a partition wall thickness of 300 $\mu$m, and a cell density of 47 cells/cm $^2$

The thus obtained silicon carbide based honeycomb structure was evaluated for shape maintainability, segment properties, and DPF performance. The shape maintainability was evaluated according to a JIS standard (JIS A 1216), which is a test method where monoaxial compression strength of a test piece self-sustained without receiving lateral pressure. For the segment property evaluation, porosity, mean pore size, three-point bending strength, and thermal conductivity were measured. Incidentally, the porosity and mean pore size were measured with a mercury porosimeter (Autopore produced by Shimadzu Corporation), and the three-point bending strength was measured by a three-point bending test according to JIS R1601 by cutting out a membrane face of the honeycomb structure. The thermal conductivity was measured by a steady method (measurement apparatus: GH-1S produced by ULVAC-RIKO, Inc.)

Table 1 shows the results when the additive rate of the regeneration raw material was varied. Incidentally, the shrinkage at drying process is calculated by the following formula.

$$(Size\ change) = (size\ before\ drying)\ /\ (size\ after\ drying)$$

EP 2 363 385 B1

Table 1

| | Raw material proportion (mass%) | Pulverization apparatus | Average particle diameter of regeneration raw material | Shape maintainability (Mpa) | Product property | | | | |
|---|---|---|---|---|---|---|---|---|---|
| | | | | | Shrinkage at drying process | Porosity (%) | Mean pore size (μm) | Three-point bending strength (MPa) | Thermal conductivity (W/mK) |
| Comp. Ex. 1 | 0 | - | - | 32 | 1.04 | 51 | 23 | 20 | 17 |
| Example 1 | 10 | Roller mill | 20 | 37 | 1.03 | 50 | 21 | 19 | 17 |
| Example 2 | 20 | Roller mill | 20 | 42 | 1.03 | 51 | 23 | 22 | 17 |
| Example 3 | 50 | Roller mill | 20 | 45 | 1.03 | 51 | 22 | 22 | 18 |
| Comp. Ex. 2 | 100 | Roller mill | 20 | 52 | 1.03 | 50 | 21 | 13 | 14 |

In comparison with 1.04, which is the case of adding no regeneration raw material (Comparative Examples 1), in the case where a regeneration raw material was added (Examples 1 to 3 and Comparative Example 2), the shrinkage at drying process was suppressed to 1.03. In addition, the shape maintainability became higher as the additive amount of the regeneration raw material was increased. This seems to be because the effects in reducing shrinkage in drying and improving the shape maintainability were exhibited since the movement of the particles in the kneaded clay state became slow due to the awkward surface shape formed by the remaining neck portion which is partially sintered around SiC serving as the framework material by the firing of the regeneration raw material.

Next, the additive amount of the regeneration raw material was changed, and the influences on the production properties were conf irmed. There was almost no influence on the porosity and the mean pore size. In addition, when the additive amount of the regeneration raw material was below 50 mass% (Examples 1 to 3), about the same three-point bonding strength and thermal conductivity as those of the case of using no regeneration raw material (Comparative Example 1) were obtained. However, when the regeneration raw material was used at 100 mass% (Comparative Example 2) , deterioration in the three-point bending strength and the thermal conductivity was confirmed. It seems that, when the proportion of the regeneration raw material is excessive, sinterability is deteriorated to cause insufficient necks, which connect SiCs.

By the same procedure as described above, the particle diameter of the regeneration raw material was varied to conduct the test. The results of the cases having different particle diameters of the regeneration raw materials are shown in Table 2.

| | Raw material proportion (mass%) | Pulverization apparatus | Average particle diameter of regenera-tion raw material ($\mu$m) | Product property | | | |
| --- | --- | --- | --- | --- | --- | --- | --- |
| | | | | Porosity (%) | Mean pore size ($\mu$m) | Three-point bending strength (MPa) | Thermal conduc-tivity (W/mK) |
| Comp. Ex. 3 | 20 | High-speed rotating mill | 150 | 49 | 18 | 20 | 18 |
| Example 4 | 20 | High-speed rotating mill | 100 | 51 | 22 | 21 | 17 |
| Example 5 | 20 | High-speed rotating mill | 50 | 51 | 23 | 22 | 17 |
| Example 6 | 20 | Roller mill | 40 | 50 | 22 | 19 | 18 |
| Example 7 | 20 | Roller mill | 20 | 51 | 23 | 22 | 17 |
| Example 8 | 20 | Roller mill | 10 | 50 | 23 | 21 | 18 |
| Example 9 | 20 | Roller mill | 5 | 51 | 22 | 20 | 18 |

In the case that the average particle diameter of the regeneration raw material was 5 to 100 $\mu$m (Examples 4 to 9), the porosity, mean pore size, three-point bending strength, and thermal conductivity were about the same as those of the case where no regeneration raw material was added (Comparative Example 1). On the other hand, in the case that the average particle diameter of the regeneration raw material was 150 $\mu$m (Comparative Example 3), deteriorations in the porosity and the mean pore size were confirmed. This seems to be because, when the particle diameter of the regeneration raw material is large, the proportion of a raw material having porous structure which was not pulverized increases in the regeneration raw material, and other raw materials enter the gap of the regeneration raw material during kneading to cause deterioration in the porosity and the pore size.

The proportion of the recovered material recovered from the fired honeycomb segment and the mixing ratios of the bonding material and the coating material were adjusted, and the oxygen content rate in the regeneration raw material was varied to perform the test. Incidentally, Example 10 shows evaluation results of the case of employing the recovered material from only the segment as the regeneration raw material. In the oxygen amount analysis, an oxygen-nitrogen simultaneous analysis apparatus (Type: EMGA-650W) produced by HORIBA, Ltd., was used. The results are shown in Table 3.

**EP 2 363 385 B1**

Table 3

| | Oxygen content rate in regeneration raw material (mass%) | Raw material proportion (mass %) | Pulverization apparatus | Average particle diameter of regeneration raw material ($\mu$m) | Pulverization time (sec) | Product property | | | |
|---|---|---|---|---|---|---|---|---|---|
| | | | | | | Porosity (%) | Mean pore size ($\mu$m) | Three-point bending strength (MPa) | Thermal conductivity (W/mK) |
| Example 10 | 5 | 20 | Roller mill | 20 | 10 | 51 | 23 | 22 | 17 |
| Example 11 | 15 | 20 | Roller mill | 20 | 10 | 51 | 21 | 20 | 18 |
| Example 12 | 20 | 20 | Roller mill | 20 | 10 | 52 | 22 | 23 | 17 |
| Example 13* | 25 | 20 | Roller mill | 20 | 10 | 50 | 21 | 21 | 17 |
| * Reference example | | | | | | | | | |

No deterioration was found in porosity, mean pore size, three-point bending strength, and thermal conductivity even the oxygen content rate in the regeneration raw material was increased up to 25 mass% (Example 10 to 13). However, in an oxygen content rate of 25 mass%, a slight color change was confirmed in a part of the segment after firing. It is considered that, since a large amount of oxides such as alumina and silica are present in the bonding material and the coating material in comparison with the honeycomb segment, when the proportion of the bonding material and the coating material in the regeneration raw material is high, oxides precipitate to cause a change in color. However, the production properties were not influenced.

Table 4 shows a firing time-reducing effect at 1450°C.

Table 4

| | Raw material proportion (mass%) | Average particle diameter of regenera-tion raw material ($\mu$m) | Firing time (Hr) (1450°C) | Product property | | | |
|---|---|---|---|---|---|---|---|
| | | | | Porosity (%) | Mean pore size ($\mu$m) | Three-point bending strength (MPa) | Thermal conduc-tivity (W/mK) |
| Example 14 | 20 | 20 | 2 | 51 | 23 | 22 | 17 |
| Example 15 | 20 | 20 | 1.8 | 51 | 22 | 20 | 18 |
| Example 16 | 20 | 20 | 1.6 | 51 | 23 | 23 | 17 |

As shown in Table 4, the firing time was varied as 2.0 hours (Example 14), 1.8 hours (Example 15), and 1.6 hours (Example 16) to confirm the influence on the product properties. As a result, deterioration was not confirmed in the porosity, mean pore size, three-point bending strength, and thermal conductivity. This seems to be because, since a neck portion is present in the regeneration raw material, which has once been fired, deterioration in the properties is not caused even if the time is shortened when the starting raw material is fired.

The present invention can suitably be applied to the manufacture of a filter (DPF) for trapping and removing particulate matter contained in a dust-containing fluid such as exhaust gas or a catalyst carrier for carrying a catalyst component for purifying harmful substances in exhaust gas.

## Claims

1.  A method for manufacturing a silicon carbide honeycomb structure, the method using a regeneration raw material regenerated from a recovered material derived from a starting raw material of a silicon carbide honeycomb structure generated in a manufacture process of a silicon carbide honeycomb structure,
    wherein the regeneration raw material is recovered from a material constituting the silicon carbide honeycomb structure in a step after the starting raw material is fired,
    the regeneration raw material having an oxygen content rate of 20 mass % or less;
    the regeneration raw material is added to the starting raw material to account for 50 mass% or less of the entire starting raw material as a part of the starting raw material after the average particle size of the regeneration raw material is controlled to be 5 to 100 $\mu$m, or the average particle size of the regeneration raw material is controlled to be 5 to 100 $\mu$m after the regeneration raw material is added to the starting raw material to account for 50 mass% or less of the entire starting raw material as a part of the starting raw material, and
    the silicon carbide honeycomb structure is manufactured using the resultant starting raw material.

## Patentansprüche

1.  Verfahren zur Herstellung einer Siliciumcarbidwabenstruktur, wobei das Verfahren mit einem Regenerationsrohmaterial arbeitet, das aus einem wiedergewonnenen Material wiederhergestellt ist, das aus einem Ausgangsrohmaterial einer in einem Herstellungsverfahren für eine Siliciumcarbidwabenstruktur erzeugten Siliciumcarbidwabenstruktur stammt,
    worin das Regenerationsrohmaterial aus einem Material, das die Siliciumcarbidwabenstruktur darstellt, in einem Schritt nach dem Brennen des Ausgangsrohmaterials wiedergewonnen ist,
wobei das Regenerationsrohmaterial einen Sauerstoffgehalt von 20 Massen-% oder weniger aufweist;
das Regenerationsrohmaterial zu dem Ausgangsrohmaterial als Teil des Ausgangsrohmaterials so zugesetzt wird, dass es 50 Massen-% oder weniger des gesamten Ausgangsrohmaterials ausmacht, nachdem die mittlere Teilchengröße des Regenerationsrohmaterials auf 5 bis 100 μm begrenzt wurde, oder die mittlere Teilchengröße des Regenerationsrohmaterials auf 5 bis 100 μm begrenzt wird, nachdem das Regenerationsrohmaterial zu dem Ausgangsmaterial als Teil des Ausgangsrohmaterials so zugesetzt wurde, dass es 50 Massen-% oder weniger des gesamten Ausgangsrohmaterials ausmacht, und
die Siliciumcarbidwabenstruktur unter Verwendung des resultierenden Ausgangsrohmaterials hergestellt wird.

**Revendications**

1. Procédé pour fabriquer une structure en nid d'abeilles en carbure de silicium, le procédé utilisant une matière première de régénération régénérée à partir d'un matériau récupéré dérivé d'une matière première de départ d'une structure en nid d'abeilles en carbure de silicium générée dans un procédé de fabrication d'une structure en nid d'abeilles en carbure de silicium,
dans lequel la matière première de régénération est récupérée à partir d'un matériau constituant la structure en nid d'abeilles en carbure de silicium dans une étape après que la matière première de départ a été brûlée,
la matière première de régénération ayant une teneur en oxygène de 20 % en masse ou moins ;
la matière première de régénération est ajoutée à la matière première de départ de manière à représenter 50 % en masse ou moins de toute la matière première de départ en tant que partie de la matière première de départ après que la granulométrie moyenne de la matière première de régénération a été contrôlée être de 5 à 100 μm, ou bien la granulométrie moyenne de la matière première de régénération est contrôlée être de 5 à 100 μm après que la matière première de régénération a été ajoutée à la matière première de départ de manière à représenter 50 % en masse ou moins de toute la matière première de départ en tant que partie de la matière première de départ, et
la structure en nid d'abeilles en carbure de silicium est fabriquée par utilisation de la matière première de départ résultante.

FIG.1

**EP 2 363 385 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004188819 A
- WO 2005030675 A
- US 20050069675 A